# EUROPEAN PATENT APPLICATION

(11) **EP 4 814 327 A1**
(43) Date of publication of application: **30.09.2026**
(21) Application number: 23959444.3
(22) Date of filing: 21.11.2023
(51) Int. Cl.: F16B 39/02

(54) **FASTENING STRUCTURE**

(71) Applicant: Nippon Plarad Co., Kobe-shi, Hyogo, 651-2404 (JP)
(72) Inventor: SAEKI Hiroshi, Kobe-shi Hyogo 651-2404 (JP)
(74) Representative: Zimmermann, Tankred Klaus
(86) International application number: PCT/JP2023/041884
(87) International publication number: WO 2025/109701

(57) **Abstract**

It is possible to avoid a catching phenomenon in which a machine screw is caught on an inclined surface of a washer by screwing and turning is not performed smoothly, and, further, it is possible to reduce processing cost.

A fastening structure is provided in which a threaded rod (1a) of a bolt (1) for attaching an object to be attached is inserted through an attachment hole of an attached member (2) to cause a tip portion to protrude, and a machine screw (5) attached to a nut (4) is screwed into the tip portion with a washer (3) interposed between them to fix the object to be attached to the attached member (2). In the washer (3), an inclined surface (3b) is formed on a first surface (3A) facing the nut (4), and a second surface (3B) opposite to the first surface (3A) is a flat surface. The inclined surface (3b) is formed such that a height gradually decreases in a tightening direction of the nut (4). A machine screw (5) having a spherical tip (5b) is screwed into the nut (4) such that a screw axis is parallel to an axis of the nut (4), and the machine screw (5) has a tip (5b) protruding and in contact with the inclined surface (3b). The inclined surface (3b) has a friction coefficient smaller than that of the second surface (3B) of the washer (3).

## Description

### Technical Field

The present invention relates to a fastening structure using a nut or a bolt.

### Background Art

Conventionally, many improvements have been devised and put into practical use regarding loosening prevention, such as a method using a spring washer, a method using a double nut, and a method of inserting a cotter pin through a nut and a bolt; however, the effect is insufficient, and loosening occurs due to vibration or the like, or the mechanism and processing are complicated and expensive.

In view of the above, a locking pin mechanism that pushes and expands a nut inner surface by inserting a lock pin into a hole provided in the nut inner surface to generate a loosening prevention pressure, and a locking pin mechanism in which a lock pin insertion hole that obliquely penetrates a position slightly away from a nut inner surface is formed, a lock pin that is slightly longer than a length of the lock pin insertion hole and has a pointed tip is inserted, then the nut is manually screwed and tightened in a male screw portion of a bolt to reach a washer, then an object to be fixed sandwiched between two washers is fixed by strongly tightening the nut using a commercially available tool such as a wrench, further tightening causes the lock pin to be pushed by the washer and a lock pin tip to firmly come into contact with the male screw portion so that the male screw portion is pushed and a loosening prevention effect is generated, and tightening more strongly causes the lock pin tip to bite into the male screw portion like a stake so that the loosening prevention effect is further enhanced are proposed (see, for example, Patent Literatures 1 and 2).

In Patent Literatures 1 and 2, since the nut inner surface is fixed by being pushed and expanded, or the lock pin tip is fixed by biting into a threaded rod of a bolt, the threaded rod (threaded portion) is damaged, and even if the nut is loosened for maintenance or the like, they cannot be reused.

In view of the above, as a fastening structure that is not loosened in a fastened state, can be easily loosened at the time of maintenance, and enables reuse of a bolt or a nut, a fastening structure in which a threaded rod of a bolt for attaching an object to be attached is inserted through an attachment hole of an attached member to cause a tip portion to protrude, and a machine screw attached to a nut with a washer interposed between them is screwed into the tip portion with an appropriate torque to fix the object to be attached to the attached member, in which the washer has an inclined surface formed on a first surface facing the nut, and a second surface opposite to the first surface is a flat surface, and the inclined surface is formed such that a height gradually decreases in a fastening direction of the nut, and a machine screw is screwed into the nut such that an axis is orthogonal to the inclined surface, the machine screw protrudes so that a tip comes into contact with the inclined surface, and the inclined surface has a friction coefficient smaller than that of the second surface of the washer (see, for example, Patent Literature 3).

In this way, the machine screw is screwed into the nut such that the axis is orthogonal to the inclined surface on the first surface of the washer, so that the threaded rod (threaded portion) of the bolt is not damaged and the bolt can be reused. Further, even if the nut turns in a loosening direction due to vibration or the like, the inclined surface has a friction coefficient smaller than that of the second surface, the machine screw moves in a direction of ascending the inclined surface, and a force that presses the washer against the attached member acts, so that the nut can be made less likely to loosen.

### Citation List

### Patent Literature

Patent Literature 1: JP 2009-293793 A
Patent Literature 2: JP 2011-179679 A
Patent Literature 3: JP 2018-138814 A

### Summary of Invention

### Technical Problem

However, in the structure of Patent Literature 3, (i) the inclined surfaces as many as the number of machine screws (= that is, a large number) are overlapped on the washer, so that the cost increases for processing of these. (ii) Since the machine screw being screwed is inclined, it is necessary to process a screw hole for the machine screw in an inclined manner with respect to a nut axis, which also increases the cost. (iii) A tip of the machine screw is perpendicular to the inclined surface of the washer, when the machine screw is strongly screwed, the machine screw slightly biting into the inclined surface, and when the nut turns to the loosened side (in the counterclockwise direction) due to vibration, the machine screw (having the tip slightly biting in) may get caught on the inclined surface of the washer and the nut may not turn smoothly. That is, there is a problem that a catching phenomenon occurs in which the washer is caught and rotated together with the nut.

A function of this structure is such that, under the condition that the nut and the washer do not turn together, the machine screw slides up the inclined surface of the washer and does not loosen even when axial force of the bolt increases and is subjected to vibration, but due to the above catching phenomenon, this function may often be lost.

An object of the present invention is to provide a fastening structure capable of avoiding the above-described catching phenomenon and reducing processing cost.

### Solution to Problem

The present invention provides a fastening structure that causes a threaded rod of a bolt for attaching an object to be attached to pass through an attachment hole of an attached member to cause a tip portion to protrude, and screwing a machine screw attached to a nut to the tip portion with a washer interposed therebetween, so as to fix the object to be attached to the attached member, in which, in the washer, an inclined surface is formed on a first surface facing the nut, and a second surface opposite to the first surface is a flat surface, the inclined surface is formed such that a height of the inclined surface gradually decreases in a tightening direction of the nut, a machine screw having a curved surface shape at a tip is screwed into the nut such that a screw axis is parallel to an axis of the nut, and a tip of the machine screw protrudes from the nut and is in contact with the inclined surface, and the inclined surface has a friction coefficient smaller than a friction coefficient of the second surface of the washer.

In this way, screw hole processing for a machine screw is simple, and a threaded rod (threaded portion) of a bolt is not damaged and the bolt can be reused. Further, even if the nut or the bolt turns in a loosening direction due to vibration or the like, since friction coefficients of the inclined surface and the second surface of the washer are made different, and the washer is pressed against the attached member by movement of the machine screw, and for this reason, the nut or the bolt is less likely to be loosened. In addition, when the nut turns to the loosened side (counterclockwise direction) by vibration, since the tip of the machine screw has a curved surface shape, the nut easily slides without being caught. Therefore, that the machine screw (slightly biting in) is caught on the inclined surface of the washer and does not turn smoothly (that is, a catching phenomenon in which the machine screw is caught and the washer is rotated together with the nut) is avoided.

In this case, the curved surface shape of the tip of the machine screw may be a spherical surface shape. Then, it is desirable that the spherical surface shape is a shape in which the shape of the tip gradually changes and becomes flat as the tip is pressed against the inclined surface of the washer and tightening is performed, and the spherical surface shape closely follows the inclined surface of the washer at a time point at which the machine screw is tightened with a specified maximum force. In this way, an average surface pressure of a tip end surface of the machine screw is lowered at a time point at which tightening of the machine screw is completed.

Further, the inclined surface desirably has a surface roughness smoother than a surface roughness of the second surface, the inclined surface desirably has a normal finish, and the second surface desirably has a rough finish. Further, one or a plurality of the inclined surfaces are preferably formed in a circumferential direction around a center hole of the washer.

Furthermore, the present invention can be applied not only to a fastening structure in which an object to be attached is attached using a nut with a washer interposed between them, but also to a fastening structure in which an object to be attached is fixed to an attached member by a headed bolt. That is, the present invention also includes a fastening structure for fixing an object to be attached to an attached member by a headed bolt, in which a washer is disposed on a threaded rod of the bolt adjacent to a head portion of the bolt, in the washer, an inclined surface is formed on a first surface facing the head portion of the bolt, and a second surface opposite to the first surface is a flat surface, the inclined surface is formed such that a height of the inclined surface gradually decreases in a tightening direction of the bolt, a machine screw having a curved surface shape at a tip is screwed into the head portion of the bolt such that a screw axis is parallel to an axis of the nut, and a tip of the machine screw protrudes from the nut and is in contact with the inclined surface, and the inclined surface has a friction coefficient smaller than a friction coefficient of the second surface of the washer.

### Advantageous Effects of Invention

In the present invention, screw hole processing for a machine screw is simple, and a threaded rod (threaded portion) of a bolt is not damaged and the bolt can be reused. Further, even if the nut or the bolt turns in a loosening direction due to vibration or the like, since friction coefficients of the inclined surface and the second surface of the washer are different, the washer can be pressed against the attached member by movement of the machine screw, and the nut or the bolt can be made less likely to be loosened. In addition to the above, when the nut turns to the loosening side (counterclockwise direction) due to vibration, it is possible to avoid a catching phenomenon in which the machine screw is caught on the inclined surface of the washer and the nut does not turn smoothly.

### Brief Description of Drawings

Fig. 1 is a cross-sectional view illustrating a fastening structure according to the present invention.
Fig. 2 is an enlarged view of a portion A in Fig. 1.
Fig. 3 is a perspective view of a washer used in the fastening structure according to the present invention as viewed from above.
Fig. 4(a) is an explanatory diagram of surface pressure distribution at the first time point (at the time of contact) when a tightening load is small, and Fig. 4(b) is an explanatory diagram of surface pressure distribution at the time point (at the time of fastening) when tightening is completed.
Fig. 5 is a cross-sectional view illustrating another embodiment.

### Description of Embodiments

Hereinafter, an embodiment according to the present invention will be described.

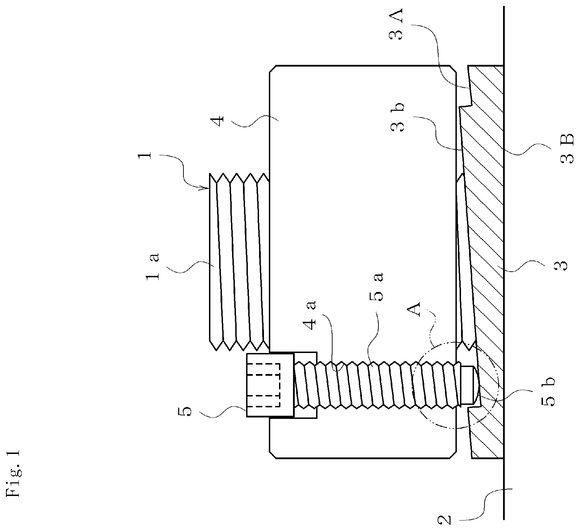

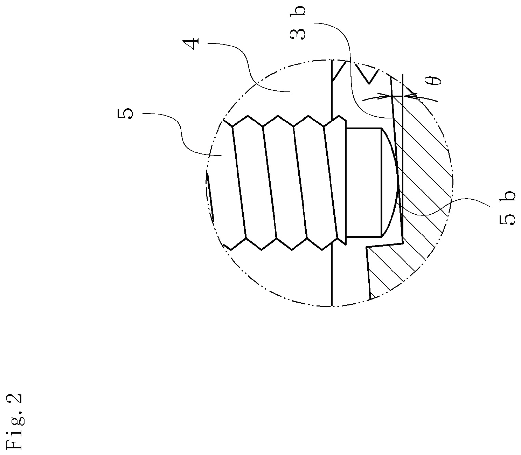

Fig. 1 is a cross-sectional view illustrating a fastening structure according to the present invention, and Fig. 2 is an enlarged view of a portion A in Fig. 1.

As shown in Figs. 1 and 2, the fastening structure according to the present invention is a fastening structure in which a threaded rod 1a of a bolt 1 for attaching an object to be attached (not shown) to an attached member 2 is inserted through an attachment hole of the attached member 2 to cause a tip portion to protrude, and a nut 4 is applied to the tip portion via a washer 3 to fix the object to be attached to the attached member 2.

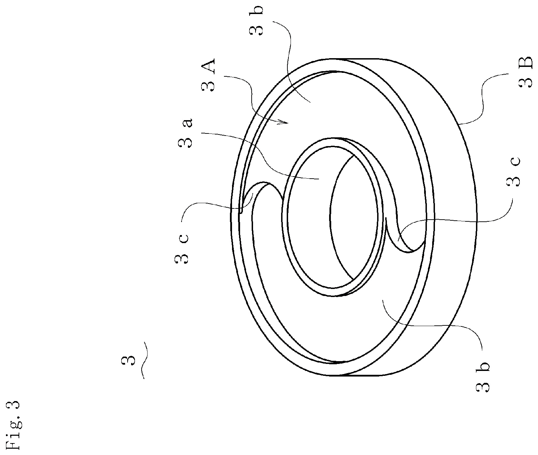

As illustrated in Fig. 3, the washer 3 has a center hole 3a through which the threaded rod 1a is inserted. Then, an inclined surface 3b is formed on a first surface 3A facing the nut 4 along a circumferential direction around the center hole 3a. On the other hand, a second surface 3B is a flat surface. Note that the number of the inclined surface 3b may be one or more, and the number of inclined surfaces is irrelevant to the number of machine screws 5 to be described later. Fig. 3 illustrates a case where the number of the inclined surfaces 3b is two.

The inclined surface 3b is continuous with a wall surface 3c rising from an end portion on a tightening direction side of the nut 4. The surfaces 3b and 3c are orthogonal to each other. The inclined surface 3b is inclined with respect to the second surface 3B at an angle equal to or more than at least a lead angle of a screw of a nut (or bolt) at θ = about 3° to 20°.

Further, friction coefficients of the first surface 3A (inclined surface 3b) and the second surface 3B of the washer 3 are varied by changing surface roughness. The inclined surface 3b is made smoother than the second surface 3B and has a smaller friction coefficient. For example, the inclined surface 3b has a normal finish, and the second surface 3B has a rough finish.

In the nut 4, a screw hole 4a into which the machine screw 5 is screwed is formed corresponding to the inclined surface 3b around a center hole of the nut 4 so that a screw axis is parallel to a nut axis. The machine screw 5 is screwed into the screw hole 4a of the nut 4, a tip 5b protrudes from the nut 4, and the tip 5b is in contact with the inclined surface 3b. The tip 5b of the machine screw 5 has a curved surface shape (for example, a spherical surface shape) in which a central portion protrudes most and is rounded.

Here, when the tip of the machine screw has a flat surface shape, since a maximum outer diameter portion (= edge) is in contact with the inclined surface 3b at substantially a right angle, the edge of the machine screw 5 that has bitten in is easily caught by the inclined surface 3b. However, as in the present invention, if the tip has a curved surface shape and is rounded, the tip portion (rounded portion) of the machine screw 5 is slightly recessed, and at the same time, the rounded portion slightly bites into the inclined surface 3b also on the inclined surface side; however, by adjusting size of the roundness, the machine screw 5 easily slides without being caught due to the roundness while making a slight recess in the inclined surface 3b.

As described above, when the tip of the machine screw 5 is rounded to have a curved surface shape, the machine screw 5 is not necessarily in contact with the inclined surface 3b of the washer 3 at a right angle, and the machine screw 5 does not need to be inclined with respect to the nut 4, and therefore, the screw hole 4a into which the machine screw 5 is screwed can be provided such that an axis of the screw hole 4a is parallel to an axis of the nut 4. By this, there is a great advantage that processing cost can be greatly reduced while the function of preventing loosening is maintained.

That is, with such a structure, when the nut 4 turns in the loosening direction (= counterclockwise) by vibration or the like, the machine screw 5 moves in an ascending direction on the inclined surface 3b of the washer 3, and as a result, a distance between an upper surface of the nut 4 and the second surface 3B of the washer 3 tends to increase. At this time, since friction coefficients of the first and second surfaces 3A and 3B of the washer 3 are different from each other, sliding between the inclined surface 3b on the washer 3 having a small friction coefficient and the tip of the machine screw 5 precedes, that is, the inclined surface 3b and the tip slide on each other before sliding between the second surface 3B and the attached member 2. If the sliding occurs even slightly, expansion occurs so that the distance becomes long, and the second surface 3B of the washer 3 is more strongly pressed against a bearing surface (attached member 2), so that the sliding becomes increasingly unlikely.

As an inclination angle of the inclined surface 3b increases, the second surface 3B of the washer 3 is more strongly pressed against the bearing surface, so that the frictional force further increases and the rotation becomes increasingly unlikely. That is, the nut 4 cannot loosen.

As an example, under a condition where the bolt 1 has a diameter of 36 mm (M36), a length 5 times the diameter (180 mm), and a bolt axial force (= tightening force) of 350 kN, and the inclined surface 3b of the washer 3 has an inclination depth of 0.6 mm, a force (= axial force or rotational torque) for loosening the nut 4 (forcibly) is 196% (about 2 times) when the force at the time of fastening is 100.

In a case where the bolt 1 has the diameter of 64 mm and the axial force of 1150 kN (the other conditions are the same), the force for loosening is 153% (1.5 times). The force with which the nut 4 is loosened varies depending on an inclination depth of the inclined surface 3b on the washer 3 (height of the wall surface 3c), and a larger force (loosening rotational torque or axial force) is required as the depth is greater.

That 153% to 196% of the force for loosening forcibly is required is the same as that the nut 4 is not loosened. This is because, since a bolt is usually fastened at 60% to 90% of a yield point, when a loosening torque (or axial force) close to twice is applied, the bolt breaks (before loosening).

Nevertheless, the nut 4 usually needs to be able to be easily loosened for maintenance and the like. That is, all nuts are required to have contradictory performance that the nuts should never be loosened, but the nuts should be easily loosened at the time of loosening.

This fastening structure exactly meets the above requirement, and the nut 4 never loosens naturally even when receiving vibration or the like in the relationship between the nut 4 and the washer 3. On the other hand, if the nut 4 is to be loosened for maintenance, the nut 4 can be easily loosened with one hand wrench, for example. That is, by loosening the machine screw 5 with one hand wrench, the nut 4 can be easily loosened even if the nut 4 is somewhat tighter than the initial tightening.

That is, according to this fastening structure, the nut 4 is not naturally loosened even if the nut 4 receives vibration or the like in a relationship between the nut 4 (machine screw 5) and the washer 3 (inclined surface 3b); however, if the nut 4 is to be loosened for maintenance, the nut 4 can be easily loosened with one hand wrench, for example.

Paragraph 0050 of Patent Literature 3 above discloses that a similar effect can be obtained even when, as a measure for making an axis of the machine screw parallel to an axis of the screw of the nut, a tip portion of the machine screw has a hemispherical shape, and the tip of the machine screw has a hemispherical shape so that the inclined surface side of the washer also follows the hemispherical portion of the machine screw, while a recessed groove having a semicircular cross section along an inclined surface is formed in the inclined surface, and the machine screw is made perpendicular without being inclined at an angle. This is to increase a contact area between the tip of the machine screw and the recessed groove of the inclined surface and reduce (= average) contact surface pressure by forming the recessed groove having a semicircular cross section along the inclined surface in the inclined surface. Otherwise, if the inclined surface is a flat surface, surface pressure of the tip portion of the machine screw is extremely increased and crushing occurs.

However, it is costly to form the recessed groove having a semicircular cross section in the washer as described above, and there is naturally a gap (clearance) between an inner diameter of the washer and the diameter of the machine screw. Therefore, in a case where the machine screw is installed, the washer may be displaced from an axial center of the nut by an amount corresponding to the clearance. Due to this deviation, there is always a possibility that the center of the recessed groove on the washer side deviates from the center of the machine screw. Then, in the case of deviation, there is a possibility that the hemispherical tip of the machine screw interferes with a side surface of the recessed groove to cause malfunction.

On the other hand, in the present invention, since the inclined surface of the washer is a flat surface, even if an inner diameter of the washer is installed to be deviated from a central axis of a nut diameter, the tip portion of the machine screw only moves on a flat surface, so that the interference problem with the recessed groove does not occur as in the structure of Patent Literature 3. A further important difference is that the roundness of the tip of the machine screw has such a large radius of curvature (= a slightly spherical surface shape) that it cannot be recognized as being hemispherical, and this radius dimension is determined by stress and strain accurately calculated by the Hertz equation of physics. Specifically, when the spherical tip of the machine screw is pressed against a washer surface and tightening is performed, the spherical tip changes in shape and gradually flattens (because the machine screw is an elastic body), and at a time point at which the machine screw is tightened with a specified maximum force, the spherical tip is designed to be fitted to the plane of the inclined surface. As a result, the average surface pressure of an end surface of the tip portion of the machine screw is lowered (= averaged) at a time point at which tightening is completed.

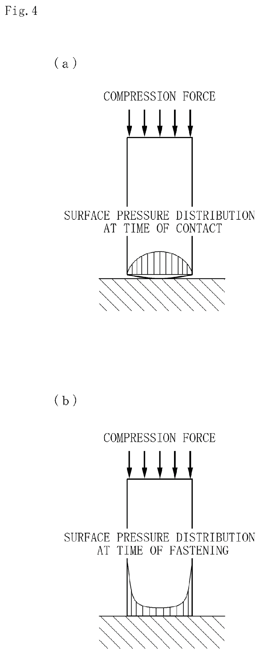

That is, the structure described in paragraph 0050 of Patent Literature 3 is a method of reducing the surface pressure by increasing the contact area of the tip of the machine screw from the beginning, but in the present invention, the tip portion of the machine screw is in "point contact" with a washer surface at the first time point (at the time of contact) when a tightening load is small (see Fig. 4(a)), but the tip becomes close to a flat surface and the surface pressure is reduced with respect to the washer at a time point at which tightening is completed (at the time of fastening) (see Fig. 4(b)). Such a physical difference between the two is large. In this case, the flat surface side of the washer is also slightly recessed, but an amount of the recess is also calculated by the Hertz equation, and the curvature radius R dimension of the tip of the machine screw is finally determined by actually conducting repeated experiments so that the machine screw can slide up on the inclined surface of the washer without any trouble when the nut moves to loosen.

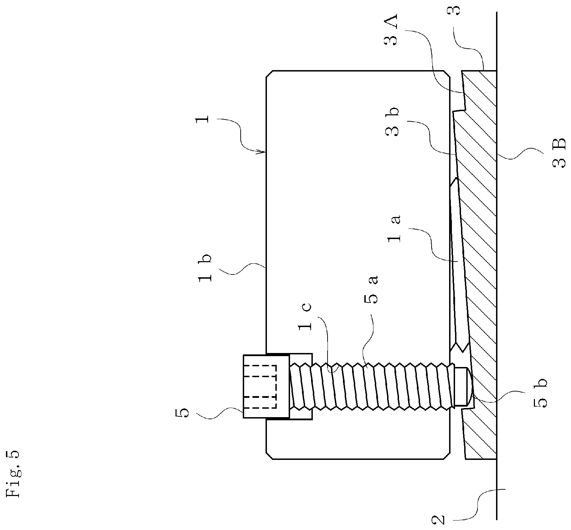

As described above, the embodiment of the present invention is described with reference to the drawings, but various additions and changes can be made without departing from the gist of the present invention. For example, the above embodiment shows the fastening structure using a relationship between the nut and the washer, but for example, as illustrated in Fig. 5, a fastening structure using a relationship between a head portion 1b of the headed bolt 1 and the washer 3 can be similarly applied. In this case, in the head portion 1b of the bolt 1, the machine screw 5 in which the tip 5b has a spherical surface shape is screwed into a screw hole 1c so that the screw axis is parallel to an axis of the bolt 1, and the tip 5b of the machine screw 5 is in contact with the inclined surface 3b. In this case, the head portion 1b of the headed bolt 1 is not limited to having a hexagonal cross section, and may have a circular cross section.

### Reference Signs List

- 1: bolt
- 1a: threaded rod
- 1b: head portion
- 1c: screw hole
- 2: attached member
- 3: washer
- 3A: first surface
- 3a: center hole
- 3B: second surface
- 3b: inclined surface
- 3c: wall surface
- 4: nut
- 4a: screw hole
- 5: machine screw
- 5a: threaded portion
- 5b: tip

## Claims

1. A fastening structure that causes a threaded rod of a bolt for attaching an object to be attached to pass through an attachment hole of an attached member to cause a tip portion to protrude, and screwing a machine screw attached to a nut to the tip portion with a washer interposed therebetween, so as to fix the object to be attached to the attached member, wherein
in the washer, an inclined surface is formed on a first surface facing the nut, and a second surface opposite to the first surface is a flat surface,
the inclined surface is formed such that a height of the inclined surface gradually decreases in a tightening direction of the nut,
a machine screw having a curved surface shape at a tip is screwed into the nut such that a screw axis is parallel to an axis of the nut, and a tip of the machine screw protrudes from the nut and is in contact with the inclined surface, and
the inclined surface has a friction coefficient smaller than a friction coefficient of the second surface of the washer.

2. The fastening structure according to claim 1, wherein
a curved surface shape of a tip of the machine screw is a spherical surface shape.

3. The fastening structure according to claim 2, wherein
the spherical surface shape is a shape in which a shape of the tip changes and gradually becomes flat as the tip is pressed against the inclined surface of the washer and tightened, and closely follows the inclined surface of the washer at a time point at which the machine screw is tightened with a specified maximum force.

4. The fastening structure according to claim 1, wherein
the inclined surface has a surface roughness smoother than a surface roughness of the second surface, the inclined surface has a normal finish, and the second surface has a rough finish.

5. The fastening structure according to claim 1, wherein
one or a plurality of the inclined surfaces are formed in a circumferential direction around a center hole of the washer.

6. A fastening structure for fixing an object to be attached to an attached member by a headed bolt, wherein
a washer is disposed on a threaded rod of the bolt adjacent to a head portion of the bolt,
in the washer, an inclined surface is formed on a first surface facing the head portion of the bolt, and a second surface opposite to the first surface is a flat surface,
the inclined surface is formed such that a height of the inclined surface gradually decreases in a tightening direction of the bolt,
a machine screw having a curved surface shape at a tip is screwed into the head portion of the bolt such that a screw axis is parallel to an axis of the nut, and a tip of the machine screw protrudes from the nut and is in contact with the inclined surface, and
the inclined surface has a friction coefficient smaller than a friction coefficient of the second surface of the washer.
